# FASCICULE DE BREVET EUROPEEN

(11) **EP 2 517 281 B1**
(45) Date de publication et mention de la délivrance du brevet: **27.01.2016**
(21) Numéro de dépôt: 10799108.5
(22) Date de dépôt: 25.11.2010
(51) Int. Cl.: H01M 2/10, B60S 5/06, B60K 1/04, F16B 21/02, B60L 11/18

(54) **DISPOSITIF DE FIXATION AMOVIBLE D'UNE BATTERIE D'UN VEHICULE AUTOMOBILE**
VORRICHTUNG ZUR LÖSBAREN BEFESTIGUNG EINER KRAFTFAHRZEUGBATTERIE
DEVICE FOR REMOVABLY ATTACHING A BATTERY OF A MOTOR VEHICLE

(30) Priorité: 21.12.2009 FR 0959272
(43) Date de publication de la demande: 31.10.2012
(73) Titulaire: Renault S.A.S., 92100 Boulogne-Billancourt (FR)
(72) Inventeur: LEJEUNE, Francois-Xavier, F-92190 Meudon (FR); THEVENART, Joel, F-78190 Trappes (FR); RICHEZ, Emmanuel, F-78770 Autouillet (FR); TURPIN, Mickael, F-91370 Verrieres Le Buisson (FR)
(86) Numéro de dépôt international: PCT/FR2010/052536
(87) Numéro de publication internationale: WO 2011/083220

(56) Documents cités:
- WO-A1-2008/128991
- JP-A- H09 188 143
- JP-Y2- S53 700
- US-A1- 2007 108 877
- US-A1- 2009 074 539
- US-B1- 6 170 304

## Description

La présente invention se rapporte à un dispositif de fixation amovible d'un conteneur d'énergie d'alimentation d'un moteur d'entraînement d'un véhicule automobile et un procédé de montage d'un tel conteneur d'énergie. Elle concerne aussi un véhicule automobile en tant que tel intégrant un tel dispositif de fixation d'un conteneur d'énergie d'alimentation.

Certains véhicules automobiles, comme les véhicules électriques ou hybrides, comprennent un conteneur d'énergie d'alimentation d'un moteur d'entraînement, comme une batterie électrique d'alimentation d'un moteur électrique. Lorsque le niveau d'énergie de cette batterie est faible, il est nécessaire de la recharger ou de la remplacer par une autre batterie chargée. Un échange peut par exemple être fait dans une station similaire à une station service dans laquelle on peut remplir un réservoir d'essence d'un véhicule automobile.

On connaît du document US 5 612 606 une station d'échange de batterie électrique d'alimentation d'un moteur d'entraînement d'un véhicule électrique et un procédé pour réaliser un tel échange. Dans la station d'échange décrite, le conducteur positionne approximativement le véhicule dans un rail, contre une butée longitudinale par rapport aux équipements de la station. Par la suite, dans des phases plus ou moins automatiques, des moyens mobiles de dépose de la batterie électrique et d'assemblage de la nouvelle batterie au véhicule viennent se positionner relativement au véhicule grâce à des capteurs. La quantité de capteurs et moyens électroniques nécessaires au fonctionnement d'une telle station la rend difficilement fiable et implique que son fonctionnement est peu robuste. Le document US 5 998 963 décrit de même une autre station d'échange de batteries pour véhicule automobile.

Le document JPH09188143A divulgue un dispositif de fixation amovible d'une batterie. Il présente notamment l'inconvénient de s'user après un grand nombre d'échange.

Pour un déploiement aisé des véhicules automobiles équipés d'une batterie, il est nécessaire de proposer un système fiable et robuste pour l'intervention sur le véhicule quand sa batterie est déchargée.

Ainsi, le but général de l'invention est de fournir une solution répondant à cette exigence et remédiant aux inconvénients mentionnés précédemment des procédés connus de l'état de la technique.

A cet effet, l'invention repose sur un dispositif de fixation amovible d'une batterie d'un véhicule automobile, caractérisé en ce qu'il comprend une partie supérieure comprenant un moyen de fixation sur un véhicule automobile et une partie inférieure comprenant un moyen de liaison avec la batterie, et en ce qu'il comprend un verrou lié à un axe de rotation et lié à un piston sur lequel agit un moyen élastique, de sorte à permettre le verrouillage et déverrouillage des deux parties supérieure et inférieure entre elles par une translation et une rotation du verrou.

Le moyen de liaison avec la batterie de la partie inférieure peut consister en une surface plane pouvant supporter l'appui vertical de la batterie.

Le moyen élastique peut comprendre au moins un ressort, ou au moins un ressort comprenant des rondelles élastiques de type « belleville ».

Le piston peut former un plateau qui vient en appui sur une butée, distincte du plateau, et solidaire de l'axe de rotation.

L'axe de rotation peut être sensiblement vertical et le piston peut être mobile en translation sensiblement parallèlement à l'axe de rotation.

La partie inférieure peut comprendre au moins un élément d'accrochage pour un outil permettant la reprise d'effort lors de l'actionnement du dispositif par cet outil.

La partie supérieure peut comprendre une surface inférieure sensiblement plane comprenant une ouverture vers un volume creux, formant une serrure, et la partie inférieure peut comprendre le verrou, l'axe, le piston et le moyen élastique.
Cette configuration particulière permet l'utilisation d'outils peu encombrants de fixation de batteries électriques.

La partie inférieure peut comprendre un volume au sein duquel est monté mobile en rotation l'axe de rotation, au sein duquel se trouve le piston, au sein duquel se trouve le moyen élastique lié au piston de sorte d'exercer une force s'opposant à la montée du piston.

La partie inférieure peut comprendre une surface supérieure comprenant une ouverture au travers de laquelle passe l'axe de rotation, le verrou se trouvant au-dessus de cette ouverture.

Le moyen élastique peut exercer une tension supérieure ou égale à 8000 N sur le verrou et/ou le coefficient de frottement entre le verrou et sa partie en contact en configuration verrouillée peut être supérieur ou égal à 0,15.

L'invention porte aussi sur une partie inférieure d'un dispositif de fixation amovible d'une batterie d'un véhicule automobile, caractérisée en ce qu'elle comprend un moyen de liaison avec une batterie, et en ce qu'elle comprend un verrou lié à un axe de rotation et lié à un piston sur lequel agit un moyen élastique, de sorte de permettre le verrouillage et déverrouillage avec une partie supérieure par une translation et une rotation du verrou.

L'invention porte aussi sur un véhicule automobile comprenant une batterie d'alimentation caractérisé en qu'il comprend au moins un dispositif de fixation amovible de sa batterie tel que décrit précédemment.

La partie supérieure du au moins un dispositif de fixation amovible peut être fixée sous le châssis ou sous le coffre du véhicule automobile.

Ces objets, caractéristiques et avantages de la présente invention seront exposés en détail dans la description suivante d'un mode d'exécution particulier fait à titre non-limitatif en relation avec les figures jointes parmi lesquelles :
La figure 1 représente schématiquement le système de fixation amovible d'une batterie sur un véhicule automobile selon un mode d'exécution de l'invention.
Les figures 2 à 6 représentent schématiquement un dispositif de fixation amovible d'une batterie sur un véhicule automobile dans plusieurs configurations correspondant à différentes phases d'un procédé de montage d'une batterie sur un véhicule automobile.
La figure 7 est une vue en perspective de côté d'un dispositif de fixation amovible d'une batterie sur un véhicule automobile selon un mode d'exécution de l'invention.
La figure 8 est une vue en perspective de dessous du dispositif de fixation amovible d'une batterie sur un véhicule automobile selon le mode d'exécution de l'invention.
La figure 9 est une vue schématique en coupe de côté du dispositif de fixation amovible d'une batterie sur un véhicule automobile selon le mode d'exécution de l'invention.

L'invention s'applique à tout véhicule comprenant un conteneur d'énergie d'alimentation positionné dans le coffre arrière ou sous le châssis. Dans la suite de la description, on décrit le montage d'un conteneur d'énergie au travers de la description du montage d'une batterie d'alimentation électrique d'un moteur d'entraînement d'un véhicule. L'invention s'applique toutefois à tout type de conteneur d'alimentation.

Le concept de l'invention repose sur une fixation amovible de la batterie sur le véhicule automobile, de sorte de pouvoir la retirer facilement pour son échange et/ou son rechargement quand cela est nécessaire, tout en garantissant son maintien fiable et sécurisé lorsque le véhicule est en route.

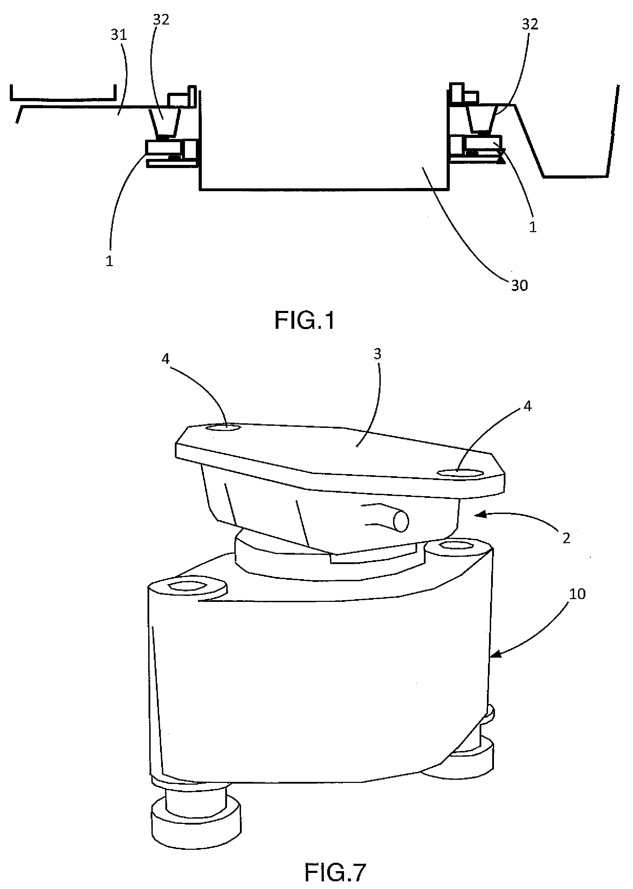

La figure 1 représente ainsi un bac de batterie 30, consistant en un support sensiblement parallélépipédique au sein duquel est logée la batterie, fixé sous le châssis 31 d'un véhicule automobile par l'intermédiaire de plusieurs dispositifs de fixation amovible 1. Dans ce mode d'exécution, un jeu de dispositifs de fixation 1 est utilisé, autant que nécessaire, selon les caractéristiques (masse, géométrie, centre de gravité, etc) du bac de batterie, soit un total de quatre dispositifs 1 dans ce mode de réalisation non limitatif. Ces derniers sont de plus fixés à des emplacements 32 particuliers agencés sous le châssis 31 du véhicule automobile. En variante, la batterie pourrait être disposée dans un bac de forme différente ou directement liée à un ou plusieurs dispositifs de fixation amovibles 1. De plus, quatre dispositifs de fixation ont été utilisés mais tout autre nombre supérieur ou égal à 1 pourrait aussi convenir.

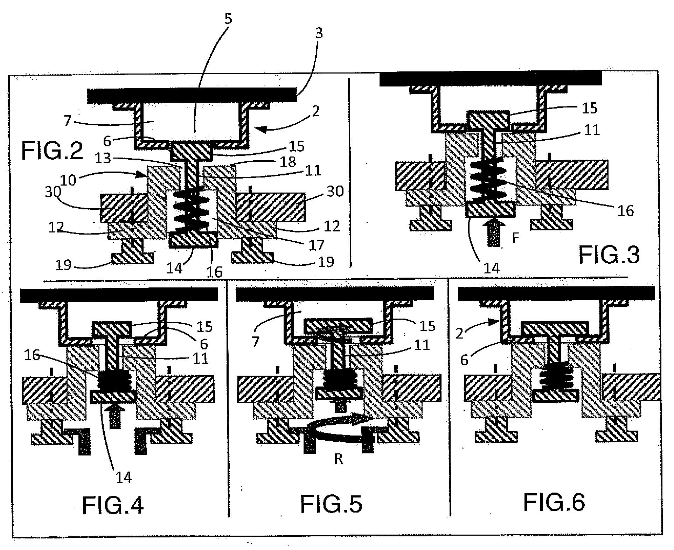

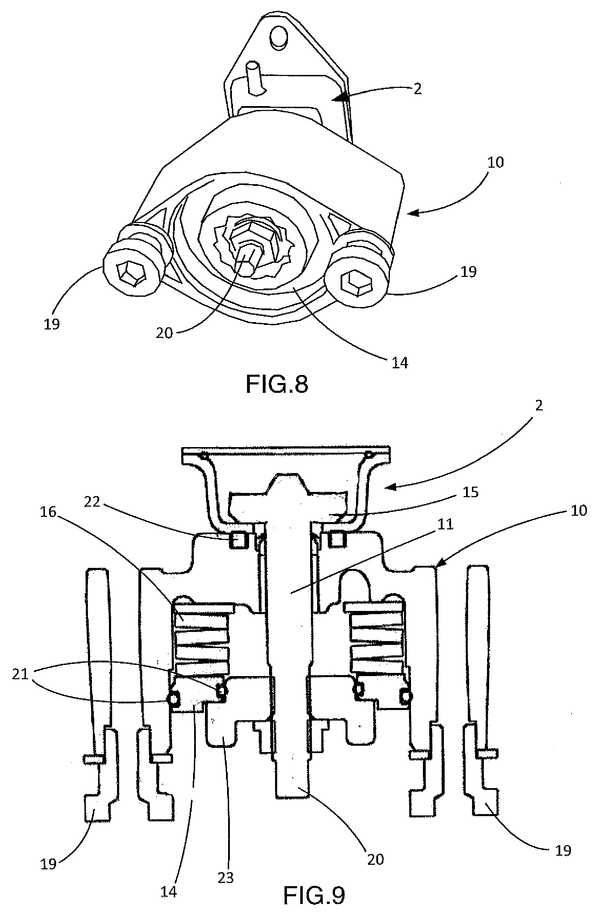

Comme cela est notamment visible sur les figures 2 à 9, le dispositif de fixation amovible 1 comprend une partie supérieure 2, solidaire d'un véhicule automobile non représenté, comme explicité ci-dessus, comprenant une surface supérieure plane 3 comprenant des moyens de fixation 4 adaptés pour une fixation au véhicule automobile, et une partie inférieure plane 6 comprenant une ouverture 5 formant une partie de liaison femelle adaptée pour une coopération avec un verrou 15. Cette structure forme ainsi un volume creux 7 accessible par l'ouverture inférieure 5, comme une serrure.

Le dispositif de fixation amovible 1 comprend de plus une partie inférieure 10, distincte et dissociable de la partie supérieure 2, et destinée à une liaison avec la batterie ou indirectement avec un bac 30 de batterie. Pour cela, elle comprend des parties planes 12 servant de support au bac de batterie 30 qui vient reposer dessus. Elle comprend une structure creuse définissant un logement creux 17 permettant notamment le passage d'un axe 11 la traversant sur sensiblement toute sa hauteur, dans une direction verticale, la traversant au travers d'une ouverture supérieure 13, comprenant un verrou 15 dans sa partie supérieure positionné au-dessus de la face supérieure 18 de la partie inférieure 10 dans laquelle est aménagée l'ouverture 13. L'extrémité inférieure de l'axe 11 est liée à un piston 14, accessible depuis la face inférieure de la partie inférieure 10 du dispositif 1. Un moyen élastique 16 est aménagé dans le volume creux 17, et agit entre le corps de cette partie inférieure 10 et le piston 14 de sorte de pouvoir générer un effort de contrainte verticale sur le piston 14. Cet effort de contrainte permet d'avoir un effort de contrainte sur le verrou 15, ce qui permet de plaquer le verrou 15 sur la partie inférieure plane 6, cette dernière pouvant ainsi être plaquée sur la face supérieure 18. Cela permet d'assurer une tension de fonctionnement supérieure ou égale à 8000 N du système. En effet, la batterie étant lourde de plusieurs centaines de kilogrammes, une telle tension de fonctionnement permet d'empêcher la batterie, en roulage et/ou en cas de choc, de se cogner contre la paroi interne du véhicule. Enfin, un ou plusieurs points d'accrochage 19, en forme de champignon, s'étendent sous la partie inférieure du dispositif, et sont aptes à la fixation d'un outil d'actionnement automatique du dispositif pour effectuer un verrouillage ou déverrouillage d'une batterie sur un véhicule automobile.

Les figures 2 à 6 illustrent les différentes étapes d'un procédé de montage d'une batterie sur un véhicule automobile à l'aide d'un dispositif de fixation amovible selon l'invention, tel que décrit ci-dessus.

La figure 2 représente une configuration dans laquelle les deux parties supérieure 2 et inférieure 10 du dispositif de fixation amovible 1 sont déverrouillées et indépendantes l'une de l'autre, le bac 30 de batterie étant solidaire de la partie inférieure 10 du dispositif et se trouvant ainsi désolidarisé du véhicule automobile.

La figure 3 représente la première étape E1 du dispositif de montage, dans laquelle la partie inférieure 10 du dispositif de fixation qui a été approchée sous la partie supérieure 2, reçoit une action de poussée verticale F sur le piston 14, permettant d'induire un déplacement en translation du verrou 15 par l'intermédiaire de l'axe de rotation 11, afin de pénétrer dans la serrure de la partie supérieure 2 du dispositif à travers l'ouverture 5, en s'opposant à l'effort du moyen élastique 16 qui tend à s'opposer à ce déplacement vers le haut du verrou 15. La figure 4 représente la configuration du dispositif de fixation 1 en fin de cette première étape E1, dans laquelle le verrou 15 est entièrement disposé au-dessus de la paroi inférieure horizontale 6 de la serrure.

La figure 5 illustre la seconde étape essentielle du procédé de montage, qui consiste en une rotation R de l'axe 11 de manière à entraîner une rotation du verrou 15. Pour cela, l'axe de rotation 11 comprend un moyen de liaison 20 dans sa partie inférieure permettant par un actionnement avec un outil la mise en oeuvre de sa rotation. Cette rotation R modifie l'orientation du verrou 15 dans une configuration où il reste verrouillé au sein du volume creux 7 de la partie supérieure 2 du dispositif, sans pouvoir s'échapper au travers de l'ouverture inférieure 5. La figure 6 illustre la configuration finale verrouillée du dispositif, dans laquelle le moyen élastique 16 exerce un effort vers le bas sur le verrou 15, qui vient ainsi en appui sur la surface inférieure 6 de la partie supérieure 2 du dispositif 1, en garantissant un maintien verrouillé de la partie inférieure 10 du dispositif et donc de la batterie sur le véhicule automobile.

Avantageusement, une tension d'environ 12000 N et de préférence au moins égale à 8000 N exercée sur le verrou dans la direction verticale permet de garantir un bon maintien de la batterie dans toutes les conditions normales de fonctionnement d'un véhicule automobile. Cette tension peut avantageusement être associée à un coefficient de frottement élevé entre le verrou et la serrure qui améliore le maintien du dispositif et empêche tout mouvement horizontal. Ce coefficient de frottement peut avantageusement être supérieur ou égal à 0,15.

L'invention porte aussi sur le procédé de montage d'une batterie sur un véhicule à l'aide d'un dispositif de fixation amovible, tel que décrit ci-dessus. Ce procédé comprend donc les deux étapes essentielles suivantes :
E1 : pression verticale vers le haut de sorte d'insérer le verrou 15 dans un logement 7 ; puis,
E2 : rotation du verrou 15.

La première étape E1 peut simplement consister à pousser le piston 14 pour le déplacer en translation, contre l'effort du moyen élastique 16. La seconde étape E2 peut consister en une rotation d'un quart de tour du verrou 15, voire toute autre rotation inférieure ou égale à un tour.

Le procédé est mis en oeuvre par un outil pour générer des efforts très importants permettant d'atteindre un maintien et verrouillage performant. Le procédé comprend alors une étape préalable E0 de fixation de l'outil sur les éléments d'accrochage 19, remplissant la fonction de reprise d'effort de poussée de l'outil sur le piston 14 pour assurer un support permettant à l'outil d'exercer l'effort de poussée nécessaire. On empêche ainsi de transférer l'effort de poussée aux éléments en liaison avec le dispositif de fixation, et en particulier au véhicule automobile. En effet, ces moyens de reprise d'efforts permettent d'exercer une poussée très importante nécessaire pour assurer une tension de verrouillage très importante du système, sans casser le véhicule électrique. En effet grâce au couplage de ces moyens de reprise d'efforts et de l'outil exerçant une pression importante sur le piston, les efforts passent en interne dans le véhicule électrique sans dégradation de celui-ci.

Naturellement, le procédé de montage comprend aussi une étape préalable de liaison du bac 30 de batterie sur une ou plusieurs partie(s) inférieure(s) d'un dispositif de fixation et l'approche de l'ensemble aux abords de son emplacement final sur la véhicule automobile.

Le démontage du bac 30 de batterie se passe de manière inverse, toutes les étapes du procédé de montage étant réversibles.

Les figures 7 à 9 illustrent plus précisément le dispositif de fixation amovible d'une batterie selon le mode d'exécution de l'invention. Ce dispositif comprend donc une partie supérieure 2 coopérant avec une partie inférieure 10, comme décrit plus haut. Ce mode d'exécution montre plus précisément les éléments participant à la mise en oeuvre de la fonction de verrouillage. L'axe central 11 est monté mobile en rotation et en translation et comprend un verrou 15 à son extrémité, formant un ensemble en forme de T. Il comprend de plus un moyen d'actionnement 20 à son extrémité inférieure, pouvant se présenter sous la forme d'une tige cylindrique présentant un méplat permettant son actionnement en rotation par un outil comprenant une clé de forme correspondante. Un moyen élastique 16, formé par exemple par des rondelles élastiques de type « belleville », est en appui d'une part sur la partie supérieure du corps de la partie inférieure du dispositif formant le volume creux, et d'autre part dans leur partie inférieure sur un piston 14 en forme de plateau, coopérant avec une butée 23, distincte du plateau, et solidaire de l'axe de rotation. Des joints d'étanchéité 21 sont disposés autour du piston plateau 14 pour assurer l'étanchéité du dispositif au niveau des liaisons entre chaque piston 14 et la paroi extérieure de la partie inférieure 10 du dispositif et entre le piston 14 et la butée 23. Ainsi, ces joints 21 assurent l'étanchéité dans la partie basse du volume creux intérieur 17 de la partie inférieure 10 du dispositif. Lorsque le piston 14 vient en appui sur la butée 23 sous l'effet du moyen élastique, il empêche tout déplacement de l'axe de rotation 11 et du verrou 15, car il vient plaquer le verrou 15 contre la surface 18 du corps de la partie inférieure. Avant la mise en oeuvre d'un procédé de verrouillage ou déverrouillage de la partie inférieure 10 du dispositif avec sa partie supérieure 2, c'est-à-dire un procédé de montage ou démontage d'une batterie, il est nécessaire d'agir en poussée sur le piston 14 pour débrayer le dispositif en libérant le verrou 15 de la contrainte du moyen élastique 16, par l'intermédiaire de la butée 23. Après ce débrayage, il est possible d'actionner le verrou 15 par les deux mouvements complémentaires de rotation et translation mentionnés précédemment.

En complément, une bague d'étanchéité à lèvres 22 est disposée autour de l'axe 11 au niveau de l'ouverture supérieure 13 pour assurer l'étanchéité dans la partie haute de la partie inférieure 10. Deux éléments d'accrochage 19 pour la fixation d'un outil d'actionnement du verrouillage et déverrouillage sont répartis symétriquement autour du verrou, afin d'obtenir un maintien stable de l'outil. Ces éléments d'accrochage 19 se présentent sous forme de champignons, sont facilement accessibles, de forme facile à nettoyer, résistants aux fortes contraintes subies et peu encombrants. En variante, le moyen d'accrochage pourrait se présenter sous toute autre forme.

Naturellement, l'invention ne se limite pas à la géométrie particulière du mode d'exécution décrit ci-dessus à titre d'exemple non limitatif. Ainsi, la géométrie du piston 14, du verrou 15, du moyen élastique 16, de la serrure 5, 6, 7 pourrait présenter d'autres formes sans sortir du concept de l'invention. Les parties femelle et mâle de respectivement la partie supérieure 2 du dispositif de fixation et de la partie inférieure 10 du même dispositif peuvent être inversées, le verrou appartenant alors à la partie supérieure et la partie inférieure formant une serrure. Plus généralement, toute géométrie est envisageable pour mettre en oeuvre la coopération entre les deux composants du dispositif de fixation grâce à un double mouvement de translation verticale et de rotation autour d'un axe vertical.

Finalement, la solution de l'invention atteint les avantages suivants :
- elle permet un remplacement rapide d'une batterie, dans une station d'échange spécialisée par exemple ;
- elle permet le maintien fixe de la batterie quand le véhicule se déplace, même en cas de forte décélération ;
- elle permet un grand nombre d'échanges avec une faible usure ;
- elle permet de fonctionner avec une dispersion de quelques millimètres dans un plan horizontal entre la batterie et la partie supérieure fixe du dispositif de fixation.

## Revendications

1. Dispositif de fixation amovible d'une batterie d'un véhicule automobile, comprenant une partie supérieure (2) comprenant un moyen de fixation (4) sur un véhicule automobile et une partie inférieure (10) comprenant un moyen (12) de liaison avec la batterie, et en ce qu'il comprend un verrou (15) lié à un axe de rotation (11) et lié à un piston (14) sur lequel agit un moyen élastique (16), de sorte à permettre le verrouillage et déverrouillage des deux parties supérieure (2) et inférieure (10) entre elles par une translation et une rotation du verrou (15), l'axe de rotation étant sensiblement vertical et le piston étant mobile en translation sensiblement parallèlement à l'axe de rotation, le dispositif étant **caractérisé en ce que** le piston forme un plateau qui vient en appui sur une butée (23), distincte du plateau, et solidaire de l'axe de rotation.

2. Dispositif de fixation amovible d'une batterie d'un véhicule automobile selon la revendication précédente, **caractérisé en ce que** le moyen de liaison (12) avec la batterie de la partie inférieure (10) consiste en une surface plane pouvant supporter l'appui vertical de la batterie.

3. Dispositif de fixation amovible d'une batterie d'un véhicule automobile selon l'une des revendications précédentes, **caractérisé en ce que** le moyen élastique (16) comprend au moins un ressort, ou au moins un ressort comprenant des rondelles élastiques de type « belleville ».

4. Dispositif de fixation amovible d'une batterie d'un véhicule automobile selon l'une des revendications précédentes, **caractérisé en ce que** la partie inférieure (10) comprend au moins un élément d'accrochage (19) pour un outil permettant le reprise d'effort lors de l'actionnement du dispositif par cet outil.

5. Dispositif de fixation amovible d'une batterie d'un véhicule automobile selon l'une des revendications précédentes, **caractérisé en ce que** la partie supérieure (2) comprend une surface inférieure (6) sensiblement plane comprenant une ouverture (5) vers un volume creux (7), formant une serrure, et **en ce que** la partie inférieure (10) comprend le verrou (15), l'axe (11), le piston (14) et le moyen élastique (16).

6. Dispositif de fixation amovible d'une batterie d'un véhicule automobile selon la revendication précédente, **caractérisé en ce que** la partie inférieure (10) comprend un volume (17) au sein duquel est monté mobile en rotation l'axe de rotation (11), au sein duquel se trouve le piston (14), au sein duquel se trouve le moyen élastique (16) lié au piston (14) de sorte d'exercer une force s'opposant à la montée du piston (14).

7. Dispositif de fixation amovible d'une batterie d'un véhicule automobile selon la revendication précédente, **caractérisé en ce que** la partie inférieure (10) comprend une surface supérieure (18) comprenant une ouverture (13) au travers de laquelle passe l'axe de rotation (11), le verrou (15) se trouvant au-dessus de cette ouverture (13).

8. Dispositif de fixation amovible d'une batterie d'un véhicule automobile selon l'une des revendications précédentes, **caractérisé en ce que** le moyen élastique (16) exerce une tension supérieure ou égale à 8000 N sur le verrou (15) et/ou **en ce que** le coefficient de frottement entre le verrou (15) et sa partie en contact en configuration verrouillée est supérieur ou égal à 0,15.

9. Véhicule automobile comprenant une batterie d'alimentation caractérisé en qu'il comprend au moins un dispositif de fixation amovible (1) de sa batterie selon l'une des revendications 1 à 8.

10. Véhicule automobile selon la revendication précédente, **caractérisé en ce que** la partie supérieure (2) du au moins un dispositif de fixation amovible (1) est fixée sous le châssis ou sous le coffre du véhicule automobile.

## Patentansprüche

1. Vorrichtung zur lösbaren Befestigung einer Kraftfahrzeugbatterie, umfassend ein oberes Teil (2), das ein Befestigungsmittel (4) an einem Kraftfahrzeug aufweist, und ein unteres Teil (10), das ein Mittel (12) zur Verbindung mit der Batterie aufweist, und dass sie einen Riegel (15) aufweist, der mit einer Rotationsachse (11) verbunden ist und mit einem Kolben (14) verbunden ist, auf den ein elastisches Mittel (16) wirkt, so dass die Verriegelung und Entriegelung des oberen (2) und des unteren (10) Teils untereinander durch eine Translation und eine Rotation des Riegels (15) möglich ist, wobei die Rotationsachse im Wesentlichen vertikal verläuft und der Kolben im Wesentlichen parallel zur Rotationsachse translatorisch bewegbar ist, wobei die Vorrichtung **dadurch gekennzeichnet ist, dass** der Kolben eine Auflage bildet, die auf einem von der Auflage verschiedenen Anschlag (23) aufliegt, der mit der Rotationsachse formschlüssig verbunden ist.

2. Vorrichtung zur lösbaren Befestigung einer Kraftfahrzeugbatterie nach dem vorhergehenden Anspruch, **dadurch gekennzeichnet, dass** das Mittel (12) zur Verbindung mit der Batterie des unteren Teils (10) aus einer ebenen Fläche besteht, die die vertikale Stütze der Batterie tragen kann.

3. Vorrichtung zur lösbaren Befestigung einer Kraftfahrzeugbatterie nach einem der vorhergehenden Ansprüche, **dadurch gekennzeichnet, dass** das elastische Mittel (16) mindestens eine Feder oder mindestens eine Feder, die Federringe vom Typ "Belleville" aufweist, aufweist.

4. Vorrichtung zur lösbaren Befestigung einer Kraftfahrzeugbatterie nach einem der vorhergehenden Ansprüche, **dadurch gekennzeichnet, dass** das untere Teil (10) mindestens ein Eingriffsglied (19) für ein Werkzeug aufweist, welches die Kraftübertragung bei dem Antrieb der Vorrichtung durch dieses Werkzeug ermöglicht.

5. Vorrichtung zur lösbaren Befestigung einer Kraftfahrzeugbatterie nach einem der vorhergehenden Ansprüche, **dadurch gekennzeichnet, dass** das obere Teil (2) eine im Wesentlichen ebene untere Fläche (6) aufweist, die eine Öffnung (5) zu einem Hohlraum (7), der ein Schloss bildet, aufweist, und dass das untere Teil (10) den Riegel (15), die Achse (11), den Kolben (14) und das elastische Mittel (16) aufweist.

6. Vorrichtung zur lösbaren Befestigung einer Kraftfahrzeugbatterie nach dem vorhergehenden Anspruch, **dadurch gekennzeichnet, dass** das untere Teil (10) einen Raum (17) aufweist, in dem die Rotationsachse (11) drehbeweglich angebracht ist, in dem sich der Kolben (14) befindet, in dem sich das mit dem Kolben (14) verbundene elastische Mittel (16) befindet, um eine Kraft auszuüben, die den Hubbewegungen des Kolbens (14) entgegenwirkt.

7. Vorrichtung zur lösbaren Befestigung einer Kraftfahrzeugbatterie nach dem vorhergehenden Anspruch, **dadurch gekennzeichnet, dass** das untere Teil (10) eine obere Fläche (18) aufweist, die eine Öffnung (13) aufweist, durch welche die Rotationsachse (11) verläuft, wobei der Riegel (15) sich oberhalb dieser Öffnung (13) befindet.

8. Vorrichtung zur lösbaren Befestigung einer Kraftfahrzeugbatterie nach einem der vorhergehenden Ansprüche, **dadurch gekennzeichnet, dass** das elastische Mittel (16) eine Spannung größer oder gleich 8000 N auf den Riegel (15) ausübt und/oder dass der Reibungskoeffizient zwischen dem Riegel (15) und seinem sich in verriegelter Anordnung in Kontakt befindlichen Teil größer oder gleich 0,15 beträgt.

9. Kraftfahrzeug, umfassend eine Versorgungsbatterie, **dadurch gekennzeichnet, dass** es mindestens eine Vorrichtung zur lösbaren Befestigung (1) seiner Batterie nach einem der Ansprüche 1 bis 8 aufweist.

10. Kraftfahrzeug nach dem vorhergehenden Anspruch, **dadurch gekennzeichnet, dass** das obere Teil (2) der mindestens einen Vorrichtung zur lösbaren Befestigung (1) unter dem Fahrgestell oder unter dem Kofferraum des Kraftfahrzeugs befestigt ist.

## Claims

1. Device for removably attaching a motor vehicle battery, comprising an upper part (2) comprising a means (4) of attachment to a motor vehicle and a lower part (10) comprising a means (12) of connection to the battery, and in that it comprises a lock (15) connected to a rotation spindle (11) and connected to a piston (14) on which there acts an elastic means (16), so as to allow the two, upper (2) and lower (10), parts to be locked together and unlocked from one another by a translational and a rotational movement of the lock (15), the rotation spindle being substantially vertical and the piston (14) being capable of a translational movement substantially parallel to the rotation spindle, the device being **characterized in that** the piston forms a plateau which comes to rest against a stop (23), separate from the plateau, and secured to the rotation spindle.

2. Device for removably attaching a motor vehicle battery according to the preceding claim, **characterized in that** the means (12) of connection to the battery belonging to the lower part (10) consists of a flat surface on which the battery can rest vertically.

3. Device for removably attaching a motor vehicle battery according to either of the preceding claims, **characterized in that** the elastic means (16) comprises at least one spring, or at least one spring comprising spring washers of the "Belleville" type.

4. Device for removably attaching a motor vehicle battery according to one of the preceding claims, **characterized in that** the lower part (10) comprises at least one attachment element (19) for a tool capable of reacting load when the device is operated using this tool.

5. Device for removably attaching a motor vehicle battery according to one of the preceding claims, **characterized in that** the upper part (2) comprises a substantially flat lower surface (6) comprising an opening (5) onto a hollow volume (7) forming a lock receptacle, and **in that** the lower part (10) comprises the lock (15), the spindle (11), the piston (14) and the elastic means (16).

6. Device for removably attaching a motor vehicle battery according to the preceding claim, **characterized in that** the lower part (10) comprises a volume (17) in which the rotation spindle (11) is mounted with the ability to rotate, within which the piston (14) is located, within which is located the elastic means (16) connected to the piston (14) so as to exert a force that opposes the upward movement of the piston (14).

7. Device for removably attaching a motor vehicle battery according to the preceding claim, **characterized in that** the lower part (10) comprises an upper surface (18) comprising an opening (13) through which the rotation spindle (11) passes, the lock (15) being situated above this opening (13).

8. Device for removably attaching a motor vehicle battery according to one of the preceding claims, **characterized in that** the elastic means (16) applies a tension greater than or equal to 8000 N on the lock (15) and/or **in that** the coefficient of friction between the lock (15) and the part in contact with it in the locked configuration is greater than or equal to 0.15.

9. Motor vehicle comprising a power supply battery, **characterized in that** it comprises at least one device (1) according to one of Claims 1 to 8 for removably attaching its battery.

10. Motor vehicle according to the preceding claim, **characterized in that** the upper part (2) of the at least one removable-attachment device (1) is fixed under the chassis or under the luggage compartment of the motor vehicle.
